# EUROPÄISCHE PATENTANMELDUNG

(11) **EP 3 407 468 A1**
(43) Veröffentlichungstag der Anmeldung: **28.11.2018**
(21) Anmeldenummer: 18173474.0
(22) Anmeldetag: 22.05.2018
(51) Int. Cl.: H02K 1/02, H01F 1/055, H01F 41/02, H02K 21/14

(54) **ROTOR FÜR EINEN ELEKTROMOTOR UND HERSTELLUNGSVERFAHREN EINES SOLCHEN ROTORS**

(30) Priorität: 22.05.2017 LU 100257
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Verfahren zum Herstellen eines permanentmagnetischen Rotors eines Elektromotors. So ist vorgesehen, dass zuerst ein permanentmagnetischer Kern (6) schichtweise mit unterschiedlichen Stoffen, insbesondere Metallen, beschichtet wird, wobei als äußerste Schicht eine Kupferbeschichtung (8) aufgebracht wird. Anschließend wird eine Klebeverbindung des beschichteten Permanentmagneten (3) mit einem Teil des Rotors hergestellt, indem der beschichtete Permanentmagnet (3) mit dem Rotorbauteil in Verbindung gebracht wird. Dabei besteht die Klebeverbindung aus einem anaerober Kleber, der unmittelbar mit der Kupferbeschichtung (8) und mit dem Rotorbauteil in Kontakt ist.

## Beschreibung

Die Erfindung betrifft ein Verfahren zum Herstellen eines Rotors für einen Elektromotor.

Die Erfindung betrifft außerdem einen Rotor, der ein Rotorbauteil und einen Permanentmagneten aufweist.

Um eine ordnungsgemäße Funktion eines Permanentmagnet-Elektromotors zu gewährleisten muss gewährleistet sein, dass sich die Permanentmagnete beim Betrieb des Elektromotors relativ zu den übrigen Bauteilen des Rotors nicht bewegen und auftretende Kräfte, insbesondere Scherkräfte, übertragen werden können. Es sind unterschiedliche Methoden zum Befestigen der Permanentmagnete bekannt.

Beispielsweise ist aus DE 10 2007 033 214 A1 ein Verfahren zum Verkleben von mindestens zwei Werkstücken bekannt, bei welchem zunächst ein Klebstoff auf mindestens eines der Werkstücke aufgetragen wird. In einem zweiten Schritt wird der Klebstoff mittels UV-Strahlung oder Vis-Strahlung aktiviert und in einem dritten Schritt das mindestens eine Werkstück, auf welches der Klebstoff aufgetragen ist, mit mindestens einem weiteren Werkstück zusammengefügt. DE 10 2007 033 214 A1 offenbart außerdem einen Elektromotor, bei welchem der mindestens eine Permanentmagnet durch das erfindungsgemäße Verfahren mit dem Rotor oder mit dem Stator verbunden ist.

Die Verwendung von Klebeverfahren ist nicht unproblematisch, da oftmals nicht sichergestellt werden kann, dass der Kleber überall vollständig aushärtet. Darüber hinaus ist es nicht vorteilhaft, Kleber zu verwenden, die für ein ausreichend schnelles Aushärten erhitzt werden müssen, da Permanentmagnete unter Hitzeeinwirkung ihre Magnetisierung verlieren können.

In WO 2013/156307 A2 ist die Verwendung von Klebeverfahren im Allgemeinen als nachteilig herausgestellt. Stattdessen wird vorgeschlagen, ein Formteil für einen Rotor oder Stator einer elektrischen Maschine zu verwenden, welches sich konzentrisch um eine Achse erstreckt und eine Stirnplatte aufweist, sowie zumindest einen Haltestrang, der an der Stirnplatte angeordnet ist, wobei der Haltestrang an seinem der Stirnplatte zugewandten Ende eine Anlagefläche aufweist, wobei erst die Verwendung dieses Formteils zum Abdichten der Aussparung für den Dauermagneten die Nutzung eines aushärtbaren Mediums, wie insbesondere Harz, zum Befestigen der Dauermagnete ermöglicht. Es wird außerdem vorgeschlagen, ein Schutzbauteil am Dauermagneten anzuordnen, das den Dauermagneten beim Umspritzen oder Umgießen mit dem aushärtbaren Medium vor der dabei entstehenden Temperaturbelastung schützt.

Aus US 6,031,310 sind ein Spindelmotor und ein Verfahren zu seiner Herstellung bekannt. Es wird ein mit einer Nickelbeschichtung versehener Magnet auf ein Rotorjoch geklebt. Auf die Nickelbeschichtung wird ein Lösungsmittel, das Metallionen, insbesondere Kupferionen, beinhaltet, aufgebracht. Die in dem Lösungsmittel enthaltenen Metallionen fungieren als Aktivator für den anschließend aufzubringenden Kleber.

EP 1 816 730 A1 offenbart ein Verfahren zum Herstellen eines Permanentmagneten zur Verwendung in einem automotive Permanentmagnetmotor (IPM motor). Auf den Permanentmagneten wird als erste Schicht eine Nickelschicht und anschließend eine Kupferschicht aufgebracht. Anschließend wird als dritte Schicht eine Nickelschicht aufgebracht.

JP 2003338419 betrifft einen Permanentmagneten, der mit einer Kupferschicht versehen und anschließend mit einem anaeroben Acrylkleber festgeklebt wird.

Es ist die Aufgabe der vorliegenden Erfindung, ein Verfahren anzugeben, das bei der Herstellung eines Rotors ein sicheres, zuverlässiges und in einfacher Weise automatisierbares Verbinden wenigstens eines Permanentmagneten mit einem Rotorbauteil ermöglicht.

Die Aufgabe wird durch ein Verfahren gelöst, das dadurch gekennzeichnet ist, dass wenigstens ein Permanentmagnet, insbesondere chemisch oder galvanisch, schichtweise mit unterschiedlichen, Stoffen, insbesondere Metallen, beschichtet wird, wobei als äußerste Schicht eine Kupferbeschichtung aufgebracht wird, und dass anschließend eine Klebeverbindung des beschichteten Permanentmagneten mit einem Rotorbauteil hergestellt wird, wobei ein anaerober Kleber unmittelbar mit der Kupferbeschichtung und mit dem Rotorbauteil in Kontakt gebracht wird.

Es eine weitere Aufgabe der vorliegenden Erfindung, einen Rotor für einen Elektromotor anzugeben, der in einfacher Weise automatisiert herstellbar ist und der dennoch eine besonders sichere Verbindung wenigstens eines Permanentmagneten mit einem Rotorbauteil aufweist.

Diese Aufgabe wird durch einen Rotor gelöst, der dadurch gekennzeichnet ist, dass der Permanentmagnet schichtweise mit unterschiedlichen, Stoffen, insbesondere Metallen, beschichtet ist, wobei die äußerste Schicht eine Kupferbeschichtung ist und dass der Permanentmagnet mittels eines anaeroben Klebers mit dem Rotorbauteil verbunden ist, wobei der anaerobe Kleber unmittelbar in Kontakt mit der Kupferbeschichtung steht.

Die Erfindung hat den ganz besonderen Vorteil, dass bei der Herstellung eines Rotors für einen Elektromotor auf vergleichsweise einfache und kostengünstige Weise eine sichere Fixierung eines Permanentmagneten an einem Rotorbauteil, wie beispielsweise einem Blechpaket oder einer Rotorwelle, hergestellt werden kann.

Es ist von ganz besonderem Vorteil, dass die Klebeverbindung hergestellt werden kann, ohne die miteinander zu verklebenden Bauteile, insbesondere den Permanentmagneten, erwärmen zu müssen. Vielmehr wird, was weiter unten noch im Detail beschrieben ist, ein sicheres und vollständiges Aushärten des Klebers vorteilhaft durch einen vollkommen anderen Wirkmechanismus bewirkt.

Ein weiterer Vorteil der Erfindung liegt darin, dass ein reiner Einkomponentenkleber verwendet werden kann, so dass ein Vermischen von mehreren Kleberkomponenten unmittelbar vor dem Klebevorgang vermieden ist. Auch ist es in vorteilhafter Weise nicht notwendig, beim Klebevorgang einen zusätzlichen Aktivator, wie beispielsweise eine Lösung, die Metallionen, insbesondere Kupferionen beinhaltet, dem anaeroben Kleber beizumischen oder auf den Permanentmagneten aufzutragen. Insbesondere ist es auch nicht nötige, eine derartige Flüssigkeit vor dem Auftragen des Klebers auf den Permanentmagneten aufzutragen, insbesondere aufzusprühen.

Insbesondere im Hinblick auf eine automatisierte Herstellung hat die Verwendung des anaeroben Klebers den weiteren ganz besonderen Vorteil, dass der Kleber beliebig lange in einem Vorratsbehälter, beispielsweise einem Vorratsbehälter einer Dosierstation, aufbewahrt werden kann, ohne dass die Gefahr besteht, dass der Kleber bereits vor seiner Verwendung aushärtet und auf diese Weise den Vorratsbehälter oder den Dosierautomaten beschädigt.

Der für das Herstellen der Klebeverbindung zu verwendende anaerobe Kleber ist vorzugsweise ein flüssiger Einkomponentenklebstoff, der erst unter Sauerstoffabschluss, insbesondere auch bei Raumtemperatur, aushärtet. Der im flüssigen Kleber enthaltene Härterbestandteil bleibt solange inaktiv, wie er mit Luftsauerstoff in Berührung steht. Wenn der Kleber nicht mehr mit Luftsauerstoff in Berührung steht, bilden sich unter Einwirkung von Kupferionen, die aus der äußersten Beschichtung des Permanentmagneten stammen, freie Radikale, die einen Polymerisationsvorgang einleiten, der zur Aushärtung des anaeroben Klebers führt.

Die Kupferbeschichtung des Permanentmagneten kann erfindungsgemäß vorteilhaft aus reinem Kupfer bestehen oder aus einer Kupferlegierung. Bei der äußersten Kupferbeschichtung handelt es sich vorzugsweise um eine dauerhafte und fest anhaftende Beschichtung. Insbesondere kann vorgesehen sein, dass die Kupferbeschichtung den gesamten Permanentmagneten umschließt.

Es ist bekannt, dass anaerobe Klebstoffe in Anwesenheit von sogenannten aktiven Werkstoffen, wie Messing, Bronze, Eisen oder Stahl, schnell aushärten, da diese aktiven Werkstoffe eine katalytische Wirkung aufweisen. Tatsächlich wurde jedoch erfindungsgemäß erkannt, dass beispielsweise ein Blechpaket für einen Rotor, das aus Eisenblechen zusammengesetzt ist, ohne einen zusätzlichen aufzutragenden flüssigen Aktivator mittels eines anaeroben Klebers für eine Anwendung in einem Elektromotor nicht zuverlässig und nicht ausreichend schnell mit einem Permanentmagneten verklebt werden kann, obwohl Eisen allgemein als Aktivator gilt.

Im Gegensatz hierzu wird durch das Aufbringen einer festen und fest anhaftenden Kupferbeschichtung auf den Permanentmagneten vorteilhaft erreicht, dass der anaerobe Kleber zuverlässig und vollständig aushärtet, ohne dass unmittelbar vor dem Auftragen des anaeroben Klebers ein flüssiger Aktivator, beispielsweise in Form einer einen aktiven Werkstoff enthaltenen Lösung, auf den Permanentmagneten oder auf das Rotorbauteil aufgetragen werden muss.

Die Erfindung gewährleistet, da der Permanentmagnet, vorzugsweise vollständig, mit Kupfer beschichtet wird, dass der anaerobe Kleber an allen Stellen, an denen er mit dem Permanentmagneten und dessen Kupferbeschichtung in unmittelbaren Kontakt steht, zuverlässig und vollständig aushärtet. Insoweit ist das bei Verwendung einer flüssigen Aktivatorlösung bestehende Risiko vermieden, dass der Kleber an den Stellen, an denen versehentlich unmittelbar vor dem Auftragen des Klebers keine Aktivatorlösung aufgetragen wurde, nicht oder nicht vollständig aushärtet. Hierbei wird erfindungsgemäß vorteilhaft ausgenutzt, dass die Kupferbeschichtung selber als Aktivator fungiert, so dass der Kelber zwangsläufig überall dort aushärtet, wo er unter Luftabschluss mit der Kupferbeschichtung in Kontakt ist. Ganz allgemein kann vorteilhaft vorgesehen sein, dass der Permanentmagnet allseitig und vollständig mit einer Kupferbeschichtung versehen wird.

Die Erfindung hat den ganz besonderen Vorteil, dass der kupferbeschichtete Permanentmagnet mit einem Rotorbauteil verklebt werden kann, das selbst nicht mit einer Kupferbeschichtung versehen ist oder das selbst nicht aus einem aktiven Werkstoff besteht, der in Bezug auf den anaeroben Kleber eine katalytische Wirkung hinsichtlich des Aushärtens hat. Vielmehr ist allein die katalytische Wirkung der Kupferbeschichtung des Permanentmagneten ausreichend, um ein vollständiges Aushärten des Klebers und damit ein sicheres und dauerhaftes Verbinden des Permanentmagneten mit dem Rotorbauteil zu bewirken.

Das erfindungsgemäße Verfahren ermöglicht es, eine sichere und zuverlässige Verbindung eines Permanentmagneten mit einem Rotorbauteil herzustellen, wobei innerhalb weniger Minuten bereits eine handfeste Klebeverbindung erreicht ist, ohne dass ein Erhitzen der miteinander zu verklebenden Bauteile nötig ist.

Die Erfindung hat darüber hinaus den ganz besonderen Vorteil, dass Schmutzreste auf dem kupferbeschichteten Permanentmagneten oder auf dem Rotorbauteil eine sichere Verklebung weitgehend nicht beeinträchtigen. Darüber hinaus wird vorteilhaft eine Verklebung erreicht, die im Bereich von -55° C bis über +200° C temperaturbeständig ist. Insoweit ist sichergestellt, dass ein mit einem erfindungsgemäßen Rotor versehener Elektromotor auch bei extremen Umgebungstemperaturen und bei hoher Belastung zuverlässig funktioniert.

Die mittels des erfindungsgemäßen Verfahrens erreichte Verbindung des Permanentmagneten mit dem Rotorbauteil ist vorteilhafter Weise beständig gegenüber den im Betrieb eines Elektromotors auftretenden mechanischen Schwingungen und dynamischen Dauerlasten.

Bei einer vorteilhaften Ausführung des erfindungsgemäßen Verfahrens wird der Permanentmagnet galvanisch beschichtet. Es ist auch möglich, alternativ oder zusätzlich andere Beschichtungsmethoden zu verwenden. Eine galvanisches Beschichten hat den besonderen Vorteil, dass auf vergleichsweise einfache und kostengünstige Weise eine feste und fest anhaftende Beschichtung aufgebracht werden kann, insbesondere ohne durch den Beschichtungsvorgang die permanentmagnetischen Eigenschaften negativ zu beeinflussen.

Insbesondere um eine robuste und fest anhaftende Beschichtung zu erreichen wird der Permanentmagnet erfindungsgemäß schichtweise mit unterschiedlichen, Stoffen, insbesondere Metallen, beschichtet, wobei als äußerste Schicht die Kupferbeschichtung aufgebracht wird.

Beispielsweise kann der Permanentmagnet zunächst mit Nickel, insbesondere chemisch oder galvanisch, beschichtet werden und anschließend, insbesondere chemisch oder galvanisch, mit Kupfer. Eine ganz besonders robuste Ausführung kann erreicht werden, indem der Permanentmagnet abwechselnd mit Nickel und Kupfer, insbesondere galvanisch, beschichtet wird, wobei die äußerste Schicht aus Kupfer gebildet wird.

Wie bereits erwähnt wird beim Herstellen der Klebeverbindung vorzugsweise und in äußerst vereinfachender Weise kein zusätzlicher Aktivator hinzu gegeben. Es ist jedoch für die Verklebung nicht schädlich, wenn zusätzlich ein, insbesondere flüssiger, Aktivator, beispielsweise eine Kupferlösung, vor dem Verkleben auf das Rotorbauteil aufgetragen wird.

Vorzugsweise erfolgt das Herstellen der Klebeverbindung ausschließlich bei Raumtemperatur. Ganz besonders bevorzugt erfolgt das Herstellen der Klebeverbindung ohne ein Erhitzen des Permanentmagneten und/oder des Rotorbauteils, beispielsweise in einem Ofen. Insbesondere kann vorteilhaft vorgesehen sein, dass das Herstellen der Klebeverbindung ohne ein Erhitzen des Permanentmagneten und/oder des Rotorbauteils über 40 Grad Celsius erfolgt.

Weiter vorzugsweise erfolgt das Herstellen der Klebeverbindung ohne ein Aktivieren des Klebers mit Licht, insbesondere UV-Licht. Insbesondere kann der Kleber derart beschaffen sein, dass er ohne ein Beaufschlagen mit Licht, insbesondere UV-Licht, aushärtet.

Das erfindungsgemäße Verfahren limitiert nicht die Möglichkeiten für die Form des Permanentmagneten. Der Permanentmagnet kann eine beliebige Form aufweisen. Besonders gut installierbar ist ein Permanentmagnet, der flach ausgebildet ist. Alternativ oder zusätzlich kann vorteilhaft vorgesehen sein, dass der Permanentmagnet quaderförmig, brotlaibförmig oder schalenförmig ausgebildet ist. Eine solche Ausführung erlaubt ein einfaches, formschlüssiges Einfügen in eine Aufnahme des Rotorbauteils.

Der Permanentmagnet kann vorteilhaft ein Seltenerdmagnet sein. Insbesondere kann der Permanentmagnet Neodym beinhalten. Bei einer besonders vorteilhaften Ausführung beinhaltet der Permanentmagnet Neodym, Eisen und Bor. Eine solche Ausführung lässt ich besonders gut und dauerhaft zunächst mit Nickel und anschließend mit Kupfer beschichten.

Bei einer vorteilhaften Ausführung wird der Permanentmagnet in einer tangentialen Ausrichtung mittels der Klebeverbindung mit dem Rotorbauteil verbunden.

Bei einer vorteilhaften Ausführung beinhaltet das Rotorbauteil ein Ferritmaterial, insbesondere Eisen. Wie bereits erwähnt kann das Rotorbauteil beispielsweise aus Eisenblechen zusammengesetzt sein und/oder einen Stapel von, insbesondere relativ zueinander elektrisch isolierter, Blechen, insbesondere Eisenblechen, aufweisen.

Das Rotorbauteil kann auch eine Rotorwelle, die beispielsweise aus Stahl gefertigt ist, sein. Insbesondere kann vorteilhaft vorgesehen sein, dass das Rotorbauteil eine Rotorwelle ist, wobei der Permanentmagnet auf die Außenseite der Rotorwelle geklebt wird.

Bei einer besonders vorteilhaften Ausführung weist das Rotorbauteil eine Aufnahme für den Permanentmagneten auf, so dass der Permanentmagnet beim Herstellen der Klebeverbindung, insbesondere formschlüssig, in die Aufnahme eingefügt werden kann. Auf diese Weise wird eine besonders stabile und dauerhafte Verbindung des Permanentmagneten mit dem Rotorbauteil erreicht. Beispielsweise kann die Aufnahme als Tasche ausgebildet sein.

Es ist insbesondere möglich, dass mehrere Permanentmagnete mit Kupfer beschichtet werden und anschließend eine Klebeverbindung der beschichteten Permanentmagnete mit dem Rotorbauteil hergestellt wird, wobei ein anaerober Kleber auf die Kupferbeschichtung der Permanentmagnete und/oder das Rotorbauteil aufgetragen wird und die Permanentmagnete und das Rotorbauteil anschließend an- oder ineinander gefügt werden.

Von besonderem Vorteil ist ein Elektromotor, der einen erfindungsgemäßen Rotor und/oder einen nach dem erfindungsgemäßen Verfahren hergestellten Rotor aufweist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Detail bei der Ausführung eines Ausführungsbeispiels eines erfindungsgemäßen Verfahrens,
- Fig. 2: ein Ausführungsbeispiel eines erfindungsgemäßen Rotors,
- Fig. 3: ein weiteres Ausführungsbeispiel eines erfindungsgemäßen Rotors,
- Fig. 4: eine Schnittdarstellung durch ein Ausführungsbeispiel eines mit einem Rotorbauteil erfindungsgemäß zu verklebenden Permanentmagneten, und
- Fig. 5: eine Schnittdarstellung durch ein weiteres Ausführungsbeispiel eines mit einem Rotorbauteil erfindungsgemäß zu verklebenden Permanentmagneten.

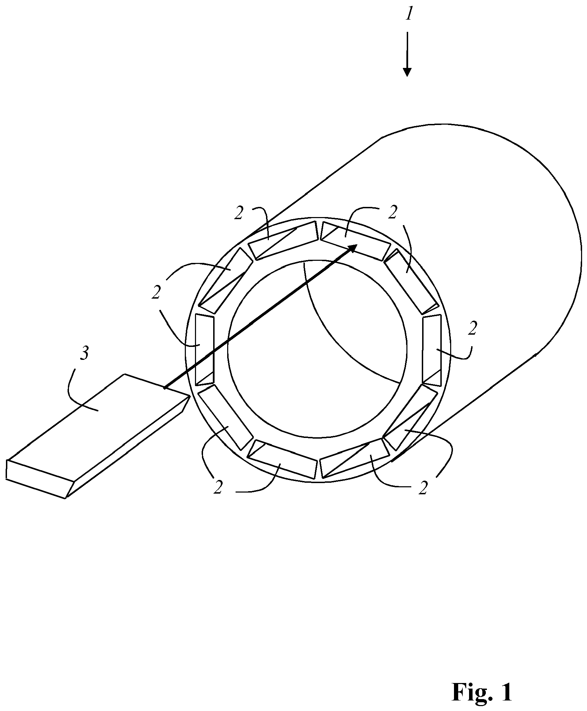

Fig. 1 zeigt ein Rotorbauteil 1, das beispielsweise als Blechpaket aus einem Stapel von gestanzten Eisenblechen gebildet sein kann. Das Rotorbauteil 1 weist eine Vielzahl von Aufnahmen 2 für jeweils einen Permanentmagneten 3 auf. Jede der Aufnahmen 2 ist als Tasche ausgebildet, in die jeweils ein Permanentmagnet 3 axial eingeschoben werden kann.

Der Permanentmagnet 3 weist eine seine Außenseite bildende feste und fest anhaftende Kupferbeschichtung auf. Unter der Kupferbeschichtung kann insbesondere eine Nickelbeschichtung vorhanden sein. Auf die Kupferbeschichtung wird unmittelbar vor dem axialen Einschieben des Permanentmagneten 3 in eine der Aufnahmen 2 ein anaerober Kleber unmittelbar aufgetragen. Alternativ oder zusätzlich kann auch vorgesehen sein, dass der anaerobe Kleber jeweils in die Tasche 2 eingefügt wird, in die anschließend ein kupferbeschichteter Permanentmagnet 3 eingeschoben wird.

Der beschriebene Vorgang wird vorzugsweise solange wiederholt, bis in sämtliche Taschen 2 des Rotorbauteils 1 jeweils ein Permanentmagnet 3 eingebracht ist.

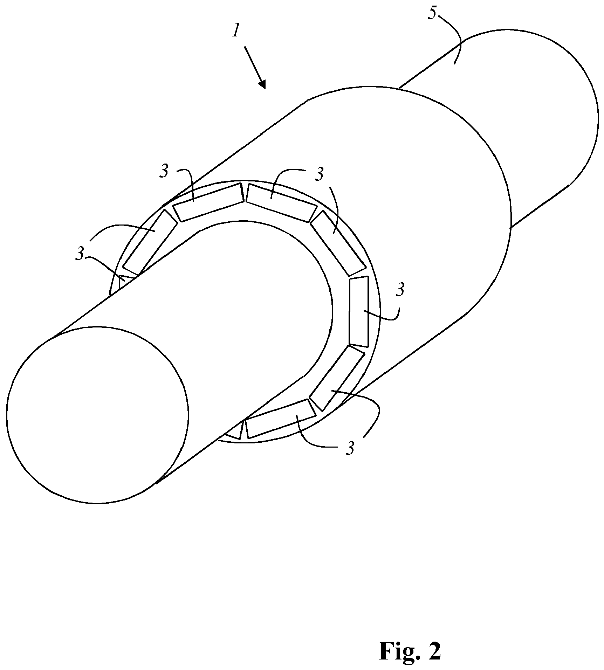

Fig. 2 zeigt ein Ausführungsbeispiel eines Rotors 4. Der Rotor 4 weist eine Rotorwelle 5 auf, die durch das mit Permanentmagneten 3 versehene Rotorbauteil 1 verläuft und die drehfest mit dem Rotorbauteil 1 verbunden ist.

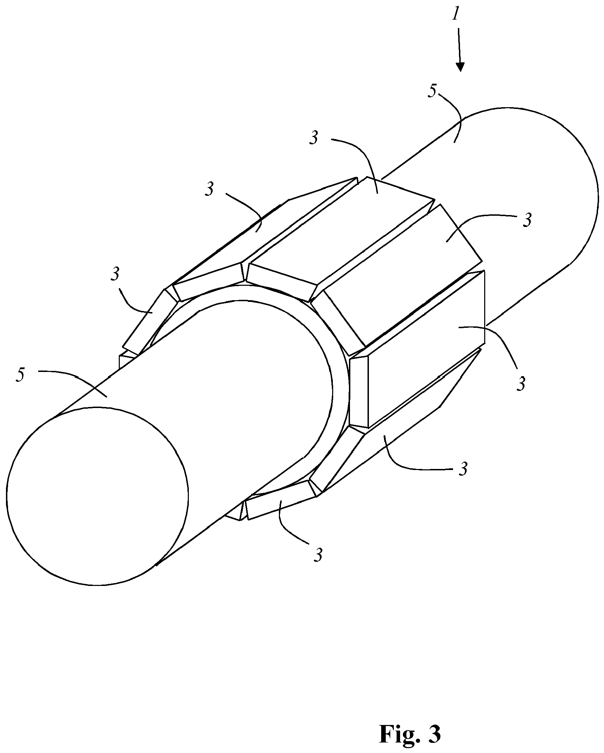

Fig. 3 zeigt ein anderes Ausführungsbeispiel eines erfindungsgemäßen Rotors 4. Der Rotor 4 weist eine Rotorwelle 5 auf, auf die jeweils mit einer äußeren, festen Kupferbeschichtung versehene Permanentmagnete 3 mittels eines anaeroben Klebers unmittelbar aufgeklebt sind. Die Rotorwelle 5 kann beispielsweise aus Stahl gefertigt sein.

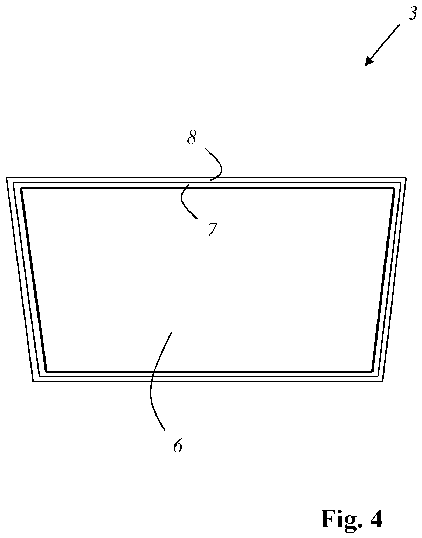

Fig. 4 zeigt einen Querschnitt durch ein Ausführungsbeispiel eines mittels des erfindungsgemäßen Verfahrens mit einem Rotorbauteil zu verklebenden Permanentmagneten 3. Der Permanentmagnet 3 weist einen permanentmagnetischen Kern 6 auf, der beispielsweise aus einem Seltenerdmaterial und/oder aus Neodym hergestellt sein kann. Der Kern trägt eine, insbesondere chemisch oder galvanisch, aufgetragene feste Nickelschicht 7. Die Nickelschicht 7 ist ihrerseits nach außen hin mit einer, insbesondere galvanisch aufgebrachten, festen Kupferbeschichtung 8 versehen.

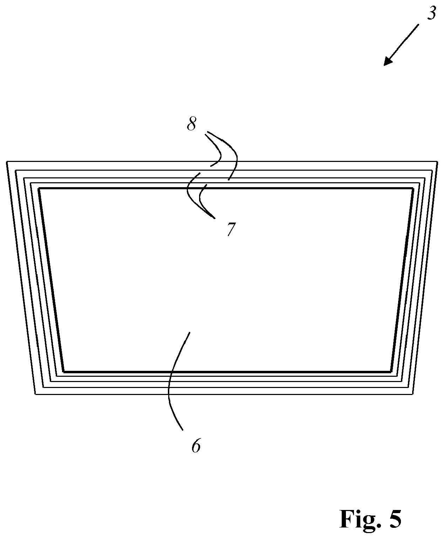

Fig. 5 zeigt einen Querschnitt durch ein Ausführungsbeispiel eines mittels des erfindungsgemäßen Verfahrens mit einem Rotorbauteil zu verklebenden Permanentmagneten 3. Der Permanentmagnet 3 weist einen permanentmagnetischen Kern 6 auf, der beispielsweise aus einem Seltenerdmaterial und/oder aus Neodym hergestellt sein kann. Der Kern trägt mehr als zwei Beschichtungen aus unterschiedlichen Materialien. Die Beschichtungen können insbesondere abwechselnd Nickelbeschichtungen 7 und Kupferbeschichtungen 8 sein, wobei die äußerste Beschichtung eine Kupferbeschichtung 8 ist.

### Bezugszeichenliste:

- 1: Rotorbauteil
- 2: Aufnahmen
- 3: Permanentmagnete
- 4: Rotor
- 5: Rotorwelle
- 6: permanentmagnetischer Kern
- 7: Nickelschicht
- 8: Kupferbeschichtung

## Patentansprüche

1. Verfahren zum Herstellen eines Rotors für einen Elektromotor, **dadurch gekennzeichnet, dass** wenigstens ein Permanentmagnet, insbesondere chemisch oder galvanisch, schichtweise mit unterschiedlichen, Stoffen, insbesondere Metallen, beschichtet wird, wobei als äußerste Schicht eine Kupferbeschichtung aufgebracht wird, und dass anschließend eine Klebeverbindung des beschichteten Permanentmagneten mit einem Rotorbauteil hergestellt wird, wobei ein anaerober Kleber unmittelbar mit der Kupferbeschichtung und mit dem Rotorbauteil in Kontakt gebracht wird.

2. Verfahren nach Anspruch 1, **dadurch gekennzeichnet, dass**
a. der Permanentmagnet zunächst mit Nickel beschichtet wird und dass anschließend das Beschichten mit Kupfer erfolgt, und/oder dass
b. der Permanentmagnet abwechselnd mit Nickel und Kupfer beschichtet wird, wobei die äußerste Schicht aus Kupfer gebildet wird.

3. Verfahren nach Anspruch 1 oder 2, **dadurch gekennzeichnet, dass**
a. beim Herstellen der Klebeverbindung kein zusätzlicher Aktivator hinzu gegeben wird, und/oder dass
b. das Herstellen der Klebeverbindung ausschließlich bei Raumtemperatur erfolgt und/oder dass
c. das Herstellen der Klebeverbindung ohne ein Erhitzen des Permanentmagneten und/oder des Rotorbauteils erfolgt und/oder dass
das Herstellen der Klebeverbindung ohne ein Erhitzen des Permanentmagneten und/oder des Rotorbauteils über 40 Grad Celsius erfolgt, und/oder dass
d. das Herstellen der Klebeverbindung ohne Aktivieren des Klebers mit Licht, insbesondere UV-Licht, erfolgt und/oder dass
e. der Kleber derart beschaffen ist, dass er ohne Beaufschlagen des Klebers mit Licht, insbesondere UV-Licht, aushärtet.

4. Verfahren nach einem der Ansprüche 1 bis 3, **dadurch gekennzeichnet, dass** der Permanentmagnet flach ausgebildet ist und/oder dass der Permanentmagnet quaderförmig, brotlaibförmig oder schalenförmig ausgebildet ist.

5. Verfahren nach einem der Ansprüche 1 bis 4, **dadurch gekennzeichnet, dass**
a. der Permanentmagnet ein Seltenerdmagnet ist und/oder dass der Permanentmagnet Neodym beinhaltet, und/oder dass
b. der Permanentmagnet in einer tangentialen Ausrichtung mittels der Klebeverbindung mit dem Rotorbauteil verbunden wird, und/oder dass
c. der Permanentmagnet auf die Außenseite des Rotorbauteils geklebt wird.

6. Verfahren nach einem der Ansprüche 1 bis 5, **dadurch gekennzeichnet, dass** das Rotorbauteil weich- oder hartmagnetische ferrimagnetische, insbesondere keramische Werkstoffe, insbesondere aus Eisen(III)-oxid (Hämatit, Fe2O3) oder Magnetit (Fe3O4) und Metalloxiden- oder Metallkarbonaten als Zuschlagsstoffe, und/oder Eisen, beinhaltet.

7. Verfahren nach einem der Ansprüche 1 bis 6, **dadurch gekennzeichnet, dass** das Rotorbauteil ein Blechpaket mit voneinander elektrisch isolierten Blechen ist oder dass das Rotorbauteil ein Blechpaket mit voneinander elektrisch isolierten Blechen aufweist.

8. Verfahren nach einem der Ansprüche 1 bis 7, **dadurch gekennzeichnet, dass** das Rotorbauteil eine Aufnahme, insbesondere eine Tasche, für den Permanentmagneten aufweist und dass der Permanentmagnet beim Herstellen der Klebeverbindung, insbesondere formschlüssig, in die Aufnahme eingefügt wird.

9. Verfahren nach einem der Ansprüche 1 bis 8, **dadurch gekennzeichnet, dass** mehrere Permanentmagnete mit Kupfer beschichtet werden und anschließend eine Klebeverbindung der beschichteten Permanentmagnete mit dem Rotorbauteil hergestellt wird, wobei ein anaerober Kleber auf die Kupferbeschichtung der Permanentmagnete und/oder das Rotorbauteil aufgetragen wird und die Permanentmagnete und das Rotorbauteil anschließend an- oder ineinander gefügt werden.

10. Rotor, insbesondere hergestellt mit einem Verfahren nach einem der Ansprüche 1 bis 9, der wenigstens ein Rotorbauteil und einen Permanentmagneten aufweist, **dadurch gekennzeichnet, dass** der Permanentmagnet schichtweise mit unterschiedlichen, Stoffen, insbesondere Metallen, beschichtet ist, wobei die äußerste Schicht eine Kupferbeschichtung ist, und dass der Permanentmagnet mittels eines anaeroben Klebers mit dem Rotorbauteil verbunden ist, wobei der anaerobe Kleber unmittelbar in Kontakt mit der Kupferbeschichtung steht.

11. Rotor nach Anspruch 10, **dadurch gekennzeichnet, dass**
a. der Permanentmagnet flach ausgebildet ist und/oder dass der Permanentmagnet quaderförmig, brotlaibförmig oder schalenförmig ausgebildet ist, und/oder dass
b. der Permanentmagnet ein Seltenerdmagnet ist und/oder dass der Permanentmagnet Neodym beinhaltet, und/oder dass
c. der Permanentmagnet in einer tangentialen Ausrichtung mittels der Klebeverbindung mit dem Rotorbauteil verbunden ist.

12. Rotor nach Anspruch 10 oder 11, **dadurch gekennzeichnet, dass**
a. das Rotorbauteil weich- oder hartmagnetische ferrimagnetische, insbesondere keramische Werkstoffe, insbesondere aus Eisen(III)-oxid (Hämatit, Fe2O3) oder Magnetit (Fe3O4) und Metalloxiden- oder Metallkarbonaten als Zuschlagsstoffe, und/oder Eisen, beinhaltet, oder dass
b. das Rotorbauteil ein Blechpacket mit voneinander elektrisch isolierten Blechen ist oder dass das Rotorbauteil ein Blechpacket mit voneinander elektrisch isolierten Blechen aufweist.

13. Rotor nach einem der Ansprüche 10 bis 12, **dadurch gekennzeichnet, dass**
a. der Permanentmagnet auf die Außenseite des Rotorbauteils geklebt ist, oder dass
b. das Rotorbauteil eine Aufnahme, insbesondere eine Tasche, für den Permanentmagneten aufweist und dass der Permanentmagnet, insbesondere formschlüssig, in die Aufnahme eingefügt ist.

14. Rotor nach einem der Ansprüche 10 bis 13, **dadurch gekennzeichnet, dass** mehrere mit Kupfer beschichtete Permanentmagnete mittels eines anaeroben Klebers mit dem Rotorbauteil verbunden sind.

15. Elektromotor, der einen Rotor nach einem der Ansprüche 10 bis 14 aufweist.
